(19) Europäisches Patentamt
European Patent Office
Office européen des brevets

(11) Veröffentlichungsnummer: **0 265 831**
**A2**

(12) # EUROPÄISCHE PATENTANMELDUNG

(21) Anmeldenummer: **87115429.0**

(51) Int. Cl.4: **C08J 3/20**, C08J 3/22

(22) Anmeldetag: **21.10.87**

(30) Priorität: **23.10.86 DE 3636023**

(43) Veröffentlichungstag der Anmeldung:
**04.05.88 Patentblatt 88/18**

(84) Benannte Vertragsstaaten:
**AT BE CH DE ES FR GB GR IT LI LU NL SE**

(71) Anmelder: **Deutsche ATOCHEM Werke GmbH**
**Siemensstrasse 21**
**D-5300 Bonn(DE)**

(72) Erfinder: **Hapelt, Karl-Heinz**
**Im Ellig 67**
**D-5300 Bonn 1(DE)**
Erfinder: **Knipf, Helmut**
**Gärtnerstrasse 34**
**D-5353 Mechernich(DE)**

(74) Vertreter: **Türk, Gille, Hrabal**
**Bruckner Strasse 20**
**D-4000 Düsseldorf 13(DE)**

(54) **Thermoplastisches Polymer.**

(57) Thermoplastisches Heißschmelzkleber-Granulat für die Schmelze-Beschichtung, deren Granulat-Körner einen Film-Überzug aufweisen aus einem Paraffin mit einem Schmelzpunkt von 45°C bis 85°C, in einer Menge von bis zu 5 Gew.-%, bezogen auf das Polymere, in welchem Film-Überzug Antioxidationsmittel vorliegt. Die Erfindung betrifft auch ein Verfahren zur Herstellung dieses Heißschmelzkleber-Granulats und dessen Verwendung für die Schmelze-Beschichtung zum Heißsiegeln.

EP 0 265 831 A2

## Thermoplastisches Polymer

Die Erfindung betrifft ein thermoplastisches Polymer mit einem Gehalt an Antioxidationsmittel, ein Verfahren zu seiner Herstellung und dessen Verwendung.

Thermoplastische Polymere wie Polyamide, Polyester, Polyurethane, Polyetheresteramide werden in großem Umfang für verschiedene Verwendungszwecke eingesetzt. Bei der Verwendung dieser Polymeren sind sie der Einwirkung von Licht und/oder Luft ausgesetzt, und sie verfärben sich dabei bei gleichzeitiger Verschlechterung ihrer mechanischen Eigenschaften umso stärker, je höher die Temperatur ist. Um diese Mängel zu vermeiden, verleiht man ihnen einen Gehalt an Antioxidationsmitteln (vergl. DE-B-1 111 376).

Es ist auch bekannt, solchen thermoplastischen Polymeren Prozesshilfen zuzusetzen, um die weitere Verarbeitung zu erleichtern, insbesondere in Spritzgußmaschinen und dergleichen. In der GB-A-812 613 wird in diesem Sinne ein Zusatz von Bienenwachs vorgeschlagen, wobei darauf hingewiesen wird, daß übliche Prozeßhilfen wie Paraffinwachse ungeeignet sind (GB-A-812 613, Seite 2, Zeile 16).

Eine besondere Klasse von thermoplastischen Polymeren sind sogenannte Heißschmelzkleber. Es handelt sich hierbei um Polyamide, Polyester, Polyurethane, Polyetheresteramide, Polyolefine und Ethylen-Vinylacetat-Copolymere, und diese werden in größtem Ausmaß verwendet zum Heißsiegeln bzw. zur Heißschmelze-Verklebung von Werkstoffen verschiedener Art, insbesondere auf dem Gebiet der Textilien. Derartige Heißschmelzkleber sind z.B. beschrieben in der DE-C-594 233 und in den DE-A-19 39 758, 23 24 159, 23 24 160, 24 36 430, 25 34 121, 32 47 755 und 33 15 529. Für dieses Einsatzgebiet werden die Heißschmelzkleber in der Regel als Granulat hergestellt, und dieses wird dann je nach dem gewünschten speziellen Verwendungszweck weiterverarbeitet. Eine besondere Art der Verwendung solcher Heißschmelzkleber-Granulate ist die sog. Schmelz-Punkt-Beschichtung. (Hot melt gravure printing.) Dieses Verfahren ist u.a. beschrieben in Adhesives Age, Dezember 1981, Seite 23. Das Heißschmelzkleber-Granulat wird gemäß diesem Verfahren aufgeschmolzen und mittels einer Gravurwalze auf ein mit dem Heißschmelzkleber zu beschichtendes Substrat, insbesondere Textilbahnen, in Punktform aufgetragen. So mit dem Heißschmelzkleber punktförmig beschichtete Textilbahnen können dann mit anderen Substraten, insbesondere anderen Textilbahnen heißgesiegelt und damit fest miteinander verbunden werden.

Bei der Verwendung von Heißschmelzkleber-Granulat für die Schmelze-Beschichtung tritt, wie oben erwähnt, eine Verfärbung und Verschlechterung der mechanischen Eigenschaften auf, die jedoch durch die Verwendung von Antioxidationsmitteln gemäß dem Stand der Technik nicht vollständig vermieden werden können. Außerdem tritt eine unerwünschte Hautbildung auf, die insbesondere bei der Schmelze-Punkt-Beschichtung zu Störungen beim Beschichtungsvorgang führt. Solche Auftragsstörungen können auch auftreten bei sonstigen Schmelze-Beschichtungen durch Walzenauftrag und dergleichen.

Der vorliegenden Erfindung liegt die Aufgabenstellung zugrunde, solche Störungen zu vermeiden. Es wurde gefunden, daß dies in überraschend einfacher und weitgehender Weise möglich ist, wenn das Heißschmelzkleber-Granulat einen Filmüberzug aus Paraffin aufweist, obwohl aus dem oben angegebenen Stand der Technik bekannt war, daß Paraffin zur Verbesserung der Verarbeitungseigenschaften von thermoplastischen Polymeren ungeeignet sein soll.

Gegenstand der Erfindung ist demgemäß ein thermoplastisches Polymeres mit einem Gehalt an Antioxidationsmittel, das dadurch gekennzeichnet ist, daß

a) das thermoplastische Polymer ein Heißschmelzkleber-Granulat für die Schmelze-Beschichtung ist,

b) die Granulat-Körner einen Film-Überzug aufweisen aus einem Paraffin mit einem Schmelzpunkt von 45°C bis 85°C in einer Menge von bis zu 5 Gew.-%, bezogen auf das Polymere und

c) das Antioxidationsmittel im Film-Überzug vorliegt.

Als thermoplastische Heißschmelzkleber können die oben erwähnten gemäß dem Stand der Technik eingesetzten Polymere verwendet werden, insbesondere Polyamide, Polyester und Polyetheresteramide. Die Schmelzbereiche der Heißschmelzkleber sind in bekannter Weise dem üblichen Verwendungszweck angepaßt. Zum Verkleben von Temperatur-empfindlichen Substraten werden naturgemäß niedrigschmelzende Heißschmelzkleber eingesetzt. Es wird dazu auf die zahlreichen Patentschriften auf diesem Gebiet verwiesen, die zum Teil oben genannt wurden.

Ein wesentliches Merkmal der Erfindung liegt darin, daß die Granulat-Körner einen Film-Überzug aufweisen aus einem Paraffin mit einem Schmelzpunkt von 45°C bis 85°C. Die untere Grenze für die Menge des Paraffins wird bestimmt u.a. durch Korngröße und Form der Granulatkörner und das Erfordernis, daß die Körner einen im wesentlichen vollständigen Film-Überzug aufweisen. Dieser bewirkt in überraschend vollständiger Weise, daß nach dem Aufschmelzen des Granulats sich auch auf der Oberfläche der Schmelze ein Film bildet, der diese vor der Einwirkung von Luft schützt. In der Regel liegt die untere Grenzmenge bei etwa 0.1 Gew.-%, bezogen auf das Gewicht des Polymeren, vorzugsweise bei etwa 0.5 Gew.-%.Die obere Grenzmenge ist nicht besonders kritisch.Ein unnötiger Überschuß ist jedoch unwirtschaftlich und auch deshalb unerwünscht, weil das Paraffin zur Verklebung nicht beiträgt. Bevorzugt liegt die obere Grenze deshalb bei etwa 3 %, besonders bevorzugt bei etwa 2 Gew.-%.

Der Schmelzpunkt des Paraffins ist so ausgewählt, daß er genügend über Raumtemperatur liegt, so daß auch bei Lagerung und Transport bei erhöhten Temperaturen der Film-Überzug nicht wesentlich zerstört wird. Der Schmelzpunkt des Paraffins soll ausreichend, zweckmäßig mindestens etwa um 10° unter dem Erweichungspunkt des Heißschmelzklebers liegen, damit die Granulatkörner mit dem geschmolzenen Paraffin überzogen werden können. Optimale Ergebnisse werden erzielt, wenn der Schmelzpunkt des Paraffins über 50°C liegt. Andererseits ist als obere Grenze für den Schmelzpunkt des Paraffins bevorzugt eine Temperatur von 70°C, besonders bevorzugt 60°C. Handelsübliche Paraffine mit einem Schmelzpunkt von etwa 55°C haben ausgezeichnete Ergebnisse erbracht. Es können die im Handel erhältlichen Paraffine, zweckmäßig die gereinigten Sorten, eingesetzt werden (Gemische gesättigter Kohlenwasserstoffe).

Die gemäß der Erfindung eingesetzten Antioxidationsmittel sind solche, wie sie auch nach dem Stand der Technik für thermoplastische Polymere einschließlich Heißschmelzkleber verwendet werden. Beispiele hierfür sind anorganische Substanzen wie: Halogensalze, Phosphorsalze (Phosphitsalze), Metallsalze, Schwefelverbindungen; organische Verbindungen wie: aromatische Hydroxyverbindungen (wie IRGANOX 1010 ®), aromatische Stickstoffverbindungen (wie IRGANOX 1098 ®).

Wenn nach dem Stand der Technik Antioxidantien während der Polykondensation zugesetzt werden, müssen diese genügend thermostabil sein. Sofern nach dem Stand der Technik thermisch instabile Antioxidantien eingesetzt wurden, wurden diese auf das Granulat aufgepudert. Dabei durften sie das Rieselverhalten des Granulats nicht nachteilig beeinflussen. Ein wesentlicher Nachteil des Aufpuderns liegt aber darin, daß beim Verpacken, Transport, Lagerung und Anwendung eine Entmischung eintritt, d.h. das aufgepuderte Antioxidationsmittel "abzuckert". Gemäß der Erfindung treten diese Nachteile nicht ein, und es können auch thermisch instabile Antioxidationsmittel eingesetzt werden.

Ein besonders guter Effekt wird gemäß der Erfindung dadurch erzielt, daß im Film-Überzug ein oder mehr Oxidationsmittel vorliegen. Naturgemäß können außerdem im Polymeren selbst noch Antioxidationsmittel vorliegen, z.B. solche, die bei der Herstellung des Polymeren in an sich bekannter Weise eingesetzt wurden. Die Menge an Antioxidationsmittel entspricht der gemäß dem Stand der Technik eingesetzten Menge und liegt zweckmäßig im Bereich von etwa 0,01 bis 3 Gew.-%, bezogen auf das Gewicht des Polymeren. Die untere Grenze liegt zweckmäßig bei etwa 0,05, bevorzugt bei etwa 0,1 Gew.-%. Die obere Grenze liegt zweckmäßig bei etwa 2 Gew.-%, bevorzugt bei etwa 1 Gew.-%.

Das Antioxidationsmittel ist im Film-Überzug aus dem Paraffin weitgehend gleichmäßig verteilt vorhanden. Sofern es in dem Paraffin nicht gelöst wurde, liegt es zweckmäßig in feiner Verteilung vor. Dies wird erreicht durch das später beschriebene Herstellungsverfahren.

Gegenstand der Erfindung ist auch ein Verfahren zur Herstellung des oben beschriebenen thermoplastischen Polymeren. Dieses ist dadurch gekennzeichnet, daß ein Granulat aus einem Heißschmelzkleber-Polymerisat in einen Mischbehälter mit einer zur Bildung eines Film-Überzugs ausreichenden Menge von bis zu 5 Gew.-%, bezogen auf das Polymere, Paraffin mit einem Schmelzpunkt von 45°C bis 85°C und an sich bekanntem Antioxidationsmittel für Heißschmelzkleber auf Temperaturen oberhalb des Schmelzpunktes des Paraffins und unterhalb des Erweichungspunkts des Heißschmelzkleber-Granulats vermischt wird, und unter Bewegung der Granulatteilchen abgekühlt wird.

Es ist nicht erforderlich, daß das für dieses Verfahren eingesetzte Heißschmelzkleber-Granulat vorgetrocknet ist.

Während des Vermischungsvorganges bildet sich auf den Granulatteilchen ein überraschend vollständiger Film-Überzug aus Paraffin, und bei der späteren Verwendung beim Aufschmelzen wird eine Verfärbung des Heißschmelzklebers und eine Hautbildung in überraschend großem Ausmaß vermieden.

Wenn während des Aufbringens des Paraffin-Film-Überzugs auf das Heißschmelzkleber-Granulat Feuchtigkeit im Mischbehälter vorhanden ist, wird zweckmäßig nach dem Vermischen und während und nach dem Abkühlen getrocknet. Dies geschieht in einfacher Weise dadurch, daß der Mischbehälter unter vermindertem Druck gehalten wird. Um einen im wesentlichen vollständigen Film-Überzug auf dem Granulatteilchen zu erzielen, ist es zweckmäßig, daß das oben beschriebene Vermischen für einen Zeitraum von mindestens etwa 0,5 Stunden durchgeführt wird. Zweckmäßig sollte mindestens etwa 1 Stunde der Mischvorgang durchgeführt werden. Die obere Grenze für die Dauer des Mischvorganges wird im wesentlichen durch wirtschaftliche Gesichtspunkte bestimmt. Unnötig lange Mischzeiten sind natürlich unwirtschaftlich. Zweckmäßig sollten deshalb die Mischzeiten nicht über 4, bevorzugt nicht über 3 und besonders bevorzugt nicht über 2 Stunden liegen. Die gleichen Überlegungen gelten für das Abkühlen und das Trocknen. Die Abkühlung erfolgt bei Raumtemperatur, bei der das Granulat dann abgeführt wird. Zum Trocknen kann ein beliebiger bei der eingesetzten technischen Anlage zur Verfügung stehender verminderter Druck angewandt werden, z.B. von bis zu 50 mbar oder sogar bis zu 10 mbar.

Während des Mischvorganges, d.h. der Bildung des Überzugs des Paraffins auf dem Heißschmelzkleber-Granulat kann es zweckmäßig sein, geringe Mengen eines Lösungsmittels zuzusetzen , in denen das Antioxidationsmittel löslich ist. Es wird auf diese Weise eine besonders feine Verteilung des Antioxidationsmittels im Paraffinfilm erzielt. Naturgemäß darf das Lösungsmittel den Heißschmelzkleber nicht oder nicht wesentlich anlösen. Bei der Verwendung der häufig gebrauchten Phosphitsalze als Antioxidationsmittel ist ein geringer Zusatz von Wasser zweckmäßig, z.B. in einer solchen Menge, daß sich eine möglichst konzentrierte Lösung in das Antioxidationsmittel im Lösungsmittel z.B. Wasser bildet.

Die Bildung eines Film-Überzugs im Sinne der Erfindung kann durch den später beschriebenen Paraffintest geprüft werden. Wenn sich nach diesem Test, d.h. der Behandlung des Granulats mit einer Polyamide einfärbenden alkoholischen Lösung und anschließendem Wasser im wesentlichen keine Farbänderung des Heißschmelzkleber-Granulats feststellen läßt, weist dieses einen Paraffin-Überzug gemäß der Erfindung auf.

Das Heißschmelzkleber-Granulat gemäß der Erfindung kann übliche sonstige Zusatzstoffe enthalten, wie optische Aufheller, Weichmacher, Keimbildner.

Die Korngrößen des Granulats können in weiten Grenzen schwanken und entsprechen den üblichen Korngrößen auf diesem technischen Gebiet. Sie liegen in der Regel über 1 mm in mindestens einer Dimension. Es können zylindrische, ellipsoide oder quaderförmige Granulate verwendet werden, z.B. in den Abmessungen 1,5 x 1,5 x 1,5 bis 3,5 x 3,5 x 3,5 mm.

Gegenstand der Erfindung ist weiterhin die Verwendung des oben beschriebenen und nach dem oben beschriebenen Verfahren hergestellten thermoplastischen Polymeren für die Schmelze-Beschichtung von zu verklebenden Substraten, insbesondere für die Schmelze-Punkt-Beschichtung, vorzugsweise von Textilien.

Beispiel 1

100 kg eines feuchten Polyamid-Heißschmelzklebers (Platamid ®MX1794, ein Copolyamid enthaltend als Monomerbausteine etwa 30 Gew.-% Caprolactam, 40 Gew.-% Laurinlactam, 30 Gew.-% äquimolare Mengen Hexamethylendiamin und Decandicarbonsäure) wurden in einen handelsüblichen Taumeltrockner mit 10 kg einer wäßrigen Aufschlämmung von 1 kg Na $H_2PO_2$ und 1 kg im Handel erhältlichen vollraffinierten Paraffin DAB FP 54/56°C (Firma WINTERSHALL) versetzt und unter Bewegung auf 65°C erhitzt. Anschließend wurde unter reduziertem Druck (10mbar) während 10 Stunden getrocknet.

Nach dem Abkühlen (unter Bewegung) auf Raumtemperatur wurde das Granulat in 25 kg-Gebinde abgefüllt.

Das Granulat wurde anschließend wie folgt geprüft:

1. Thermostabilität

10 g des Granulates wurden in einem Aluminium-Pfännchen bei 230°C in einem Umluftwärmeschrank a) 30 min. und b) 60 Minuten lang unter Sauerstoffkontakt aufgeschmolzen und gelagert. Nach Abkühlung der Schmelze wurde die erstarrte Masse visuell, wie in der nachfolgenden Tabelle aufgeführt, beurteilt.

2. Thermostabilität nach simulierten Transportbedingungen

Zu diesem Zweck wurde 1 kg des Granulates auf einem handelsüblichen Rüttelsieb 15 Minuten lang gerüttelt und anschließend dem unter Punkt 1 beschriebenen Thermooxidationstest unterworfen.

3. Paraffintest

Zu diesem Zweck wurde das Granulat 5 Sekunden mit einer Polyamid-färbenden alkoholischen Lösung (Sudanblau 0,2% in Methanol) behandelt und anschließend mit klarem Leitungswasser gewaschen. Ein gleichmäßiger Überzug der Granulate verhindert die Einfärbung des Polyamides.

Beurteilung der Farbe und Hautbildung:

+ : keine Veränderung
+-: geringe Veränderung
-: deutliche Veränderung

Beispiel 2 und 3

Nach dem im Beispiel 1 beschriebenen Verfahren wurde das in Beispiel 1 verwendete Heißschmelzkleber-Granulat mit den in der nachfolgenden Tabelle angegebenen Mengen Paraffin und Antioxidationsmittel behandelt unter Bildung eines Paraffin-Überzugs.

Vergleichsbeispiele I bis VI:

Für diese Vergleichsbeispiele wurde das gleiche Heißschmelzkleber-Granulat wie in Beispiel 1 eingesetzt. In der Tabelle sind die Mengen an Paraffin bzw. Antioxidationsmittel angegeben, mit denen das Heißschmelzkleber-Granulat behandelt wurde. In der Spalte 3 der Tabelle 1 ist stichwortartig angegeben, in welcher Weise die Behandlung erfolgte. Der Ausdruck "gemäß Erfindung" besagt, daß das im Beispiel 1 angewandte Verfahren des Vermischens von einem oder mehreren Zusätzen mit dem Heißschmelzkleber-Granulat angewandt wurde.

Der Ausdruck "bei der Polykondensation zugefügt" bedeutet, daß der oder die Zusatzstoffe vor oder während der Polykondensation zur Herstellung des Heißschmelzkleber-Granulats zugesetzt wurden. Nach diesem Verfahren bildet sich nicht ein Film-Überzug auf den Granulat-Körnern, wie gemäß der Erfindung.

Die Ergebnisse der Vergleichsbeispiele I bis-VI, sowie deren Stabilisationssystem-und Verfahren sind in nachfolgender Tabelle 1 aufgeführt.

Bei dem im Vergleichsbeispiel VI aufgeführten Produkt handelt es sich um einen handelsüblichen, für den Schmelze-Punktauftrag empfohlenen Heißschmelzkleber der Firma HENKEL (USA).

Wie aus den in der Tabelle 1 aufgeführten Werten ersichtlich, zeigen die erfindungsgemäß beschriebenen Beispiele deutliche Verbesserungen bezüglich Hautbildung und Verfärbung gegenüber dem Stand der Technik.

Tabelle 1

| | Zusätze | Verfahren des Zusatzes | Thermostabilität nach Herstellung | | Nach simulierten Transportbedingungen | | Paraffintest |
|---|---|---|---|---|---|---|---|
| | | | 30min Farbe/Haut | 60min Farbe/Haut | 30min Farbe/Haut | 60 min Farbe/Haut | |
| Beispiel 1 | 1% $NaH_2PO_2$ 1% Paraffin | gemäß Erfindung | + / + | +- / + | + / + | +- / + | gleichmäßige Beschichtung, keine Anfärbung des Granulats |
| Beispiel 2 | 1% $NaH_2PO_2$ 0,5% Paraffin | gemäß Erfindung | + / + | +- / + | + / + | +- / + | gleichmäßige Beschichtung, sehr geringe Anfärbung des Granulats |
| Beispiel 3 | 0,5% $NaH_2PO_2$ 1,5% Paraffin | gemäß Erfindung | + / + | + / + | + / + | + / + | gleichmäßige Beschichtung, keine Anfärbung des Granulats |
| Vergleichsbeispiel I | 1% Paraffin | gemäß Erfindung | +- / + | - / - | +- / + | - / - | wie Beispiel 1 und 3 |
| II | 1% $NaH_2PO_2$ | gemäß Erfindung | +- / +- | +- / - | +- / +- | - / - | kein Filmüberzug, Granulat angefärbt |
| III | 1% $NaH_2PO_2$ | bei der Polykondensation zugefügt | - / +- | - / - | - / +- | - / - | wie Vergleichsbeispiel II |
| IV | 1% IRGANOX 1010 | bei der Polykondensation zugefügt | +- / +- | +- / - | +- / +- | +- / - | wie Vergleichsbeispiel II |
| V | 1% $NaH_2PO_2$ 1% Paraffin | bei der Polykondensation zugefügt | +- / +- | - / - | +- / +- | - / - | wie Vergleichsbeispiel II |
| VI | etwa 1,5% Paraffin | unbekannt | + / + | +- / +- | + / + | +- / +- | wie Vergleichsbeispiel II |

## Ansprüche

1. Thermoplastisches Polymeres mit einem Gehalt an Antioxidationsmittel, **dadurch gekennzeichnet,** daß

a) das thermoplastische Polymer ein Heißschmelzkleber-Granulat für die Schmelze-Beschichtung ist,

b) die Granulat-Körner einen Film-Überzug aufweisen aus einem Paraffin mit einem Schmelzpunkt von 45°C bis 85°C in einer Menge von bis zu 5 Gew.-%, bezogen auf das Polymere, und

c) das Antioxidationsmittel im Film-Überzug vorliegt.

2. Verfahren zur Herstellung von einem thermoplastischen Polymer nach Anspruch 1, dadurch gekennzeichnet, daß ein Granulat aus einem Heißschmelzkleber-Polymerisat in einen Mischbehälter mit einer zur Bildung eines Film-Überzugs ausreichenden Menge von bis zu 5 Gew.-%, bezogen auf das Polymere, Paraffin mit einem Schmelzpunkt von 45°C bis 85°C und an sich bekanntem Antioxidationsmittel für Heißschmelzkleber auf Temperaturen oberhalb des Schmelzpunktes des Paraffins und unterhalb des Erweichungspunktes des Heißschmelzkleber-Granulats vermischt wird, und unter Bewegung der Granulatteilchen abgekühlt wird.

3. Verfahren nach Anspruch 2, dadurch gekennzeichnet, daß nach dem Vermischen unter Bewegung getrocknet wird.

4. Verwendung des thermoplastischen Polymeren nach einem oderen mehreren der Ansprüche 1 bis 3 als Heißschmelzkleber für die Schmelze-Beschichtung zum Heißsiegeln.

5. Verwendung nach Anspruch 4 für die Schmelze-Punkt-Beschichtung.